# EUROPÄISCHE PATENTSCHRIFT

(11) **EP 3 465 101 B1**
(45) Veröffentlichungstag und Bekanntmachung des Hinweises auf die Patenterteilung: **24.08.2022**
(21) Anmeldenummer: 17723299.8
(22) Anmeldetag: 27.04.2017
(51) Int. Cl.: G01F 1/60

(54) **VERFAHREN ZUM BETREIBEN EINES MAGNETISCH-INDUKTIVEN DURCHFLUSSMESSGERÄTS ZUR MESSUNG DER DURCHFLUSSGESCHWINDIGKEIT ODER DES VOLUMENDURCHFLUSSES EINES MEDIUMS IN EINEM MESSROHR**
METHOD FOR OPERATING A MAGNETIC-INDUCTIVE FLOW METERING DEVICE FOR MEASURING THE RATE OF FLOW OR THE VOLUME FLOW OF A MEDIUM IN A MEASURING TUBE
PROCÉDÉ PERMETTANT DE FAIRE FONCTIONNER UN DÉBITMÈTRE À INDUCTION MAGNÉTIQUE POUR LA MESURE DE LA VITESSE D'ÉCOULEMENT OU DU DÉBIT VOLUMIQUE D'UN MILIEU DANS UN TUBE DE MESURE

(30) Priorität: 31.05.2016 DE 102016110024
(43) Veröffentlichungstag der Anmeldung: 10.04.2019
(73) Patentinhaber: Endress+Hauser Flowtec AG, 4153 Reinach (CH)
(72) Erfinder: SPAHLINGER, Andre, 79415 Bad Bellingen (DE); BINZER, Martin, 4222 Zwingen (CH); KRETZLER, Timo, 79589 Binzen (DE)
(74) Vertreter: Andres, Angelika Maria
(86) Internationale Anmeldenummer: PCT/EP2017/060083
(87) Internationale Veröffentlichungsnummer: WO 2017/207187

(56) Entgegenhaltungen:
- WO-A1-2009/154116
- DE-A1- 10 312 058
- DE-A1-102014 107 200

## Beschreibung

Die Erfindung betrifft ein Verfahren zum Betreiben eines magnetisch-induktiven Durchflussmessgeräts zur Messung der Durchflussgeschwindigkeit oder des Volumendurchflusses eines Mediums in einem Messrohr und ein magnetisch-induktives Durchflussmessgerät.

Magnetisch-induktive Durchflussmessgeräte werden bereits seit langer Zeit zur Durchflussmessung eingesetzt und haben sich bewährt. Das Prinzip der magnetisch-induktiven Durchflussmessung basiert auf der Induktion einer durchflussabhängigen elektrischen Spannung in einem leitfähigen, durch eine Rohrleitung fließendes Medium durch ein Magnetfeld, welches Magnetfeld senkrecht zur Flussrichtung ausgerichtet ist. Das Magnetfeld wird üblicherweise durch ein Magnetsystem mit einer oder mehreren Spulen erzeugt. Die durchflussabhängige Spannung wird von zwei Messelektroden abgegriffen und von einer Messvorrichtung ausgewertet. Bei Kenntnis der Leitfähigkeit des Mediums lässt sich aus der gemessenen Spannung und dem bekannten Magnetfeld der Durchfluss des Mediums durch die Rohrleitung bestimmen.

Um die Signalqualität zu erhöhen, wird das Magnetfeld üblicherweise periodisch in seiner Polarität geändert. Durch Vergleich von Spannungsmesswerten, welche bei unterschiedlichen Magnetfeldpolaritäten gemessen werden, können Störgrößen wie beispielsweise ein Signalrauschen oder ein Spannungsoffset unterdrückt werden.

Das Umschalten zwischen zwei Magnetfeldpolaritäten geschieht durch Wechseln der Polarität einer elektrischen Spannung, welche an die magnetfelderzeugende Spule angelegt wird. Der Umpolvorgang dauert jedoch eine gewisse Zeit, da Spulen einer Änderung des Magnetfelds gemäß der Lenzschen Regel entgegenwirken und somit eine gewisse Trägheit aufweisen. Während der Umpolzeit kann keine Durchflussmessung durchgeführt werden, somit stellt der Umpolvorgang verlorene Zeit dar.

Der Stand der Technik, welcher beispielsweise durch die Offenlegungsschrift DE10312058A1 offenbart wird, begegnet diesem Problem durch Anlegen einer Überspannung an magnetfelderzeugende Spulen zur Beschleunigung des Umpolvorgangs, wobei die Überspannung deutlich größer ist, als die Spannung während der Messphase. Dadurch kann die Dauer des Umpolvorgangs beträchtlich verringert werden.

Jedoch stellt die Verkürzung der Umpolphase durch Anlegen einer Überspannung einen hohen Leistungsanspruch an die Spannungsversorgung, da in der Endphase eines Umpolvorgangs gleichzeitig eine hohe Spannung an der Spule anliegt und ein großer Strom durch die Spule fließt.

Die WO2009154116A1 beschreibt ein magnetisch-induktives Durchflussmessgerät, bei welchem eine Schaltvorrichtung dazu eingerichtet ist, einen Spulenstrom abhängig von einer Durchflussrate einzustellen.

Aufgabe der Erfindung ist es daher, ein Verfahren zum Betreiben eines magnetisch-induktiven Durchflussmessgeräts und ein magnetisch-induktives Durchflussmessgerät vorzuschlagen, bei welchem der Leistungsanspruch an die Spannungsversorgung reduziert ist.

Die Aufgabe wird erfindungsgemäß gelöst durch ein Verfahren gemäß dem unabhängigen Anspruch 1 sowie durch ein magnetisch-induktives Durchflussmessgerät gemäß dem unabhängigen Anspruch 8.

Das erfindungsgemäße Verfahren wird durch ein magnetisch-induktives Durchflussmessgerät umgesetzt, wobei mindestens ein Magnetsystem ein im Wesentlichen senkrecht zu einer Längsachse des Messrohrs verlaufendes und periodisch die Polarität änderndes Magnetfeld zur Induktion einer durchflussabhängigen Spannung im Medium erzeugt,
wobei in einer Messphase zum Aufnehmen von mindestens einem Spannungswert zur Ermittlung der Durchflussgeschwindigkeit oder dem Volumendurchfluss ein im Wesentlichen konstantes Magnetfeld erzeugt wird, welches in einer Umpolphase umgepolt wird;
und wobei eine elektronische Betriebsschaltung mit einer Umpolschaltung die Anbindung des Magnetsystems über die Umpolschaltung an eine Spannungsversorgung steuert,
wobei die Spannungsversorgung eine erste Spannungsquelle und eine zweite Spannungsquelle aufweist, wobei die zweite Spannungsquelle eine Kondensatoreinheit aufweist, welche als Energiespeicher dient;
wobei die erste Spannungsquelle dazu eingerichtet ist, das Magnetsystem während der Messphase zu betreiben und wobei die zweite Spannungsquelle dazu eingerichtet ist, das Magnetsystem während der Umpolphase zu betreiben, wobei die Umpolschaltung die Polarität der Anbindung alternierend steuert;
wobei mindestens zwei mit dem Medium gekoppelte Messelektroden die im Medium durch das Magnetfeld induzierte Spannung erfassen, wobei die elektronische Betriebsschaltung des Weiteren dazu eingerichtet ist, die von den Messelektroden erfasste Spannung auszuwerten;
wobei das Verfahren folgende Schritte aufweist:
   Beaufschlagen des Magnetsystems über die Umpolschaltung mit einer im Wesentlichen konstanten Spannung durch die erste Spannungsquelle und Laden der Kondensatoreinheit während einer Messphase;
   Ändern der Polarität der Anbindung mittels der Umpolschaltung und Beaufschlagen des Magnetsystems über die Umpolschaltung mit einer veränderlichen Überspannung durch die zweite Spannungsquelle während der Umpolphase,
   Beaufschlagen des Magnetsystems über die Umpolschaltung mit einer konstanten Spannung durch die erste Spannungsquelle während der auf die Umpolphase folgenden Messphase, wobei die Überspannung einen Anfangswert zu Beginn der Umpolphase und einen Endwert zu Ende der Umpolphase aufweist, und wobei der Betrag des Anfangswerts größer ist als der Betrag des Endwerts,
   und wobei die Kondensatoreinheit zumindest am Anfang der Umpolphase aufgrund einer Einschwingeigenschaft des Magnetsystems vom Magnetsystem geladen wird, und wobei zumindest am Ende der Umpolphase die Energieversorgung des Magnetsystems zumindest teilweise durch die Kondensatoreinheit erfolgt.

In einer Ausgestaltung des Verfahrens wird zumindest am Ende der Umpolphase die Energieversorgung des Magnetsystems vollständig von der Kondensatoreinheit übernommen.

In einer Ausgestaltung des Verfahrens wird während der gesamten Umpolphase die Energieversorgung vollständig vom Kondensator übernommen.

In einer Ausgestaltung des Verfahrens wird der Betrag des Endwerts größer eingestellt als der Betrag der konstanten Spannung.

In einer Ausgestaltung des Verfahrens wird der Betrag des Endwerts im Wesentlichen gleich dem Betrag der konstanten Spannung eingestellt.

In einer Ausgestaltung des Verfahrens wird der Betrag der Umpolspannung auf 120V und insbesondere auf 100V und bevorzugt auf 90V begrenzt.

In einer Ausgestaltung des Verfahrens wird der Kondensator während der Messphase durch die zweite Spannungsquelle aufgeladen.

Ein erfindungsgemäßes magnetisch-induktives Durchflussmessgerät zur Messung der Durchflussgeschwindigkeit oder des Volumendurchflusses eines Mediums in einem Messrohr zur Anwendung des Verfahrens umfasst dabei:
Ein Messrohr;
mindestens ein Magnetsystem mit jeweils mindestens einer Spule, welches Magnetsystem dazu eingerichtet ist, ein im Wesentlichen senkrecht zu einer Längsachse des Messrohrs verlaufendes Magnetfeld zu erzeugen;
und mindestens zwei im Messrohr angeordnete Messelektroden, welche mit dem Medium gekoppelt ist, und wobei die Messelektroden dazu eingerichtet sind, eine im Medium durch das Magnetfeld induzierte, durchflussabhängige Spannung zu erfassen;
und mindestens eine Spannungsversorgung, welche eine erste Spannungsquelle und eine zweite Spannungsquelle aufweist, wobei die zweite Spannungsquelle eine Kondensatoreinheit aufweist, welche als Energiespeicher dient;
und eine elektronische Betriebsschaltung mit einer Umpolschaltung, welche dazu eingerichtet ist, das Magnetsystem und die Messelektrode zu betreiben und mit der Umpolschaltung die Anbindung des Magnetsystems über die Umpolschaltung an die Spannungsversorgung zu steuern;
In einer Ausgestaltung des Durchflussmessgeräts ist die zweite Spannungsquelle dazu eingerichtet, die Kondensatoreinheit während einer Messphase zu laden.

In einer Ausgestaltung des Durchflussmessgeräts ist die Kondensatoreinheit dazu eingerichtet, zumindest zu Beginn einer Umpolphase vom Magnetsystem geladen zu werden.

In einer Ausgestaltung des Durchflussmessgeräts weist die Umpolschaltung mindestens eine Wechselschaltung auf, welches dazu eingerichtet ist, das Magnetsystem entweder an die erste Spannungsquelle oder an die zweite Spannungsquelle anzubinden.

In einer Ausgestaltung des Durchflussmessgeräts weist die Wechselschaltung mindestens einen Transistor und mindestens eine Diode auf.

In einer Ausgestaltung des Durchflussmessgeräts weist die Betriebsschaltung eine zentrale Steuereinheit zum Steuern der Umpolschaltung und/oder der Wechselschaltung auf.

In einer Ausgestaltung des Durchflussmessgeräts weist die Umpolschaltung vier Schaltelemente auf, wobei ein erstes Schaltelement und zweites Schaltelemente eine erste Serienschaltung bilden, und wobei ein drittes Schaltelement und ein viertes Schaltelement eine zweite Serienschaltung bilden und wobei die erste Serienschaltung und die zweite Serienschaltung parallel geschaltet sind.

In einer Ausgestaltung des Durchflussmessgeräts erfolgt das Beaufschlagen des Magnetsystems mit einer Spannung durch Abgreifen eines ersten elektrischen Potentials zwischen dem ersten Schaltelement und dem zweiten Schaltelement und einem zweitenelektrischen Potentials zwischen dem dritten Schaltelement und dem vierten Schaltelement.

Es wird also durch die vorliegende Erfindung ein Verfahren zum Betreiben eines magnetisch-induktiven Durchflussmessgeräts mit geringer Leistungsanforderung an eine Spannungsversorgung sowie ein magnetisch-induktives Durchflussmessgerät vorgeschlagen. Im Folgenden wird die Erfindung anhand von Ausführungsbeispielen erläutert.
Fig. 1 zeigt einen schematischen Verfahrensablauf.
Fig. 2 zeigt einen schematischen zeitlichen Verlauf der an das Magnetsystem angelegten Spannung gemäß der vorliegenden Erfindung.
Fig. 3 zeigt den schematischen Aufbau einer erfindungsgemäßen elektronischen Betriebsschaltung.
Fig. 4 zeigt einen schematischen Querschnitt durch ein erfindungsgemäßes magnetisch-induktives Durchflussmessgerät.
Fig. 5 zeigt einen beispielhaften Aufbau einer erfindungsgemäßen Wechselschaltung.

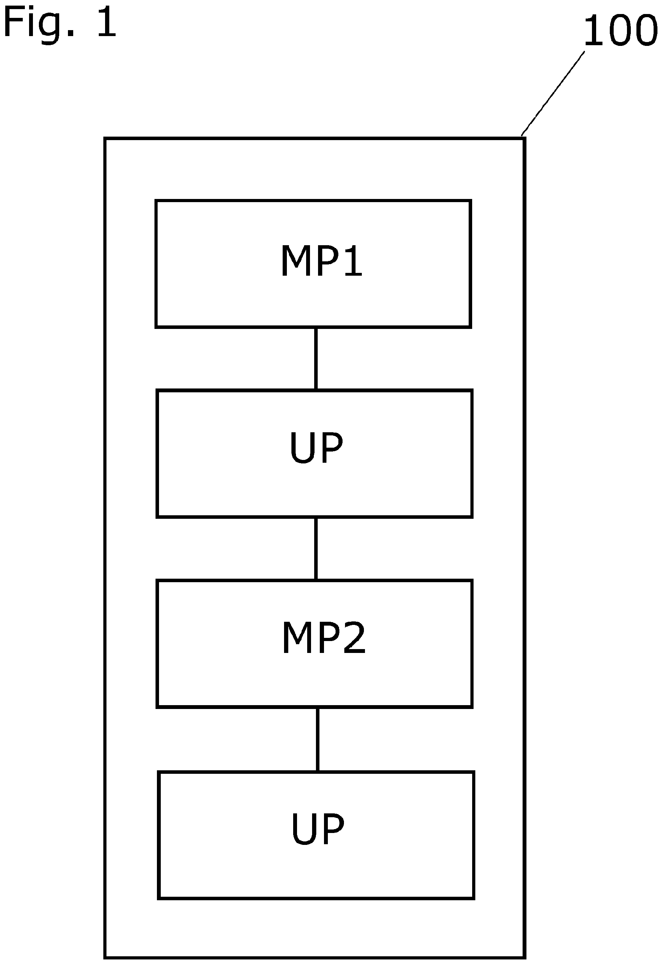

Fig. 1 zeigt einen schematischen Ablauf des erfindungsgemäßen Verfahrens 100, Zunächst wird ein Magnetsystem M während einer einer Umpolphase UP vorausgehenden Messphase MP1 über eine Umpolschaltung UPS mit einer im Wesentlichen konstanten Spannung UK1 durch eine erste Spannungsquelle Q1 einer Spannungsversorgung SV beaufschlagt. Des Weiteren wird eine Kondensatoreinheit KE einer zweiten Spannungsquelle Q2 der Spannungsversorgung SV während der Messphase MP1 geladen, so dass die Kondensatoreinheit KE am Ende der Messphase MP1 mit einer Ladespannung geladen ist, so dass mit Beginn einer folgenden Umpolphase UP das Magnetsystem M zu Beginn der Umpolphase mit einem Anfangswert UUA einer veränderlichen Überspannung UU beaufschlagt werden kann.

Mit Beenden der Messphase MP1 findet eine Umpolphase UP statt. Die Betriebsschaltung wechselt zur Spannungsversorgung durch die zweite Spannungsquelle Q2 und schaltet Schaltelemente S1 bis S4, um die Polarität des Magnetfelds zu wechseln. Während der Umpolphase UP wird das Magnetsystem M mit der veränderlichen Überspannung UU beaufschlagt, wobei die Überspannung UU den Anfangswert UUA zu Beginn der Umpolphase und einen Endwert UUE zu Ende der Umpolphase aufweist, und wobei der Betrag des Anfangswerts UUA größer ist als der Betrag des Endwerts UUE ist. Des Weiteren wird zu Beginn der Umpolphase UP der Kondensator der ersten Spannungsquelle Q1 aufgrund einer Einschwingeigenschaft des Magnetsystems vom Magnetsystem geladen.

Nach Abschluss des Umpolvorgangs findet eine Messphase MP2 statt. Während der Messphase MP2 wird das Magnetsystem M über die Umpolschaltung UPS mit einer im Wesentlichen konstanten Spannung UK2 durch die erste Spannungsquelle Q1 der Spannungsversorgung SV beaufschlagt. Der Betrag des Spannungswerts UUE der vorausgehenden Umpolphase ist dabei größer oder gleich der Spannung UK2. Des Weiteren wird die Kondensatoreinheit KE der zweiten Spannungsquelle Q2 der Spannungsversorgung SV während der Messphase MP2 geladen, so dass die Kondensatoreinheit KE am Ende der Messphase MP2 mit einer Ladespannung geladen ist, so dass mit Beginn einer folgenden Umpolphase (UP) das Magnetsystem M zu Beginn der Umpolphase mit einem Anfangswert UUA der veränderlichen Überspannung UU beaufschlagt werden kann.

Nach der Messphase MP2 findet eine neue Umpolphase UP statt. Die Betriebsschaltung wechselt zur Spannungsversorgung durch die zweite Spannungsquelle Q2 und schaltet Schaltelemente S1 bis S4, um die Polarität des Magnetfelds zu wechseln. Während der Umpolphase UP wird das Magnetsystem M mit einer veränderlichen Überspannung UU beaufschlagt, wobei die Überspannung UU einen Anfangswert UUA zu Beginn der Umpolphase und einen Endwert UUE zu Ende der Umpolphase aufweist, und wobei der Betrag des Anfangswerts UUA größer ist als der Betrag des Endwerts UUE ist. Des Weiteren wird zu Beginn der Umpolphase UP der Kondensator der ersten Spannungsquelle Q1 aufgrund einer Einschwingeigenschaft des Magnetsystems vom Magnetsystem geladen.

Mit Beenden der Umpolphase nach der Messphase MP2 ist ein Messphasen-Umpolphasen-Zyklus durchlaufen und ein neuer Zyklus startet mit einer Messphase MP1. Der Betrag des Spannungswerts UUE der vorausgehenden Umpolphase ist dabei größer oder gleich der Spannung UK1 der Messphase MP1.

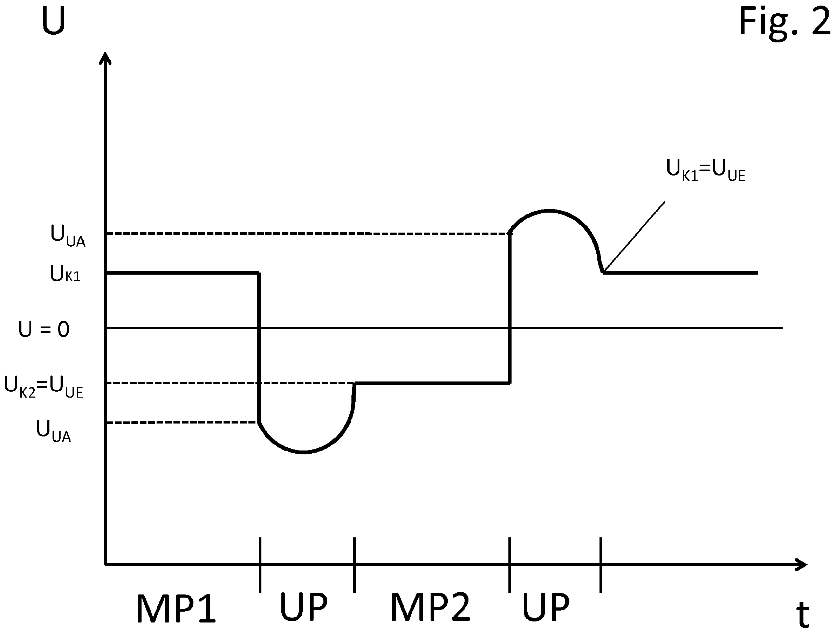

Fig. 2 zeigt einen schematischen zeitlichen Verlauf der am Magnetsystem M anliegenden Spannung U. Während einer Messphase MP1 liegt eine im Wesentlichen konstante Spannung UK1 zum Treiben eines im Wesentlichen konstanten Stroms am Magnetsystem an. Somit wird im Messrohr 10 ein konstantes Magnetfeld zur Induktion einer elektrischen Spannung im strömenden Medium erzeugt. Gleichzeitig wird die Kondensatoreinheit KE der zweiten Spannungsquelle Q2 geladen.

Mit Beenden der Messphase MP1 wird eine Umpolphase eingeleitet, wobei die Spannungsversorgung des Magnetsystems M durch die Kondensatoreinheit KE gegeben ist, so dass zu Beginn der Umpolphase UP eine Spannung UUA am Magnetsystem anliegt. Durch eine Einschwingeigenschaft des Magnetsystems wird die Kondensatoreinheit KE zumindest am Anfang der Umpolphase vom Magnetsystem geladen. Dadurch steigt der Betrag der am Kondensator und der am Magnetsystem M anliegenden Spannung zunächst weiter an. Mit Abklingen des Einschwingens beginnt der Kondensator sich zu entladen, so dass der Betrag der Spannung über dem Magnetsystem M absinkt, bis der Umpolvorgang des Magnetsystems abgeschlossen ist. Mit Beenden des Umpolvorgangs liegt am Magnetsystem eine Spannung UUE an, wobei der Betrag der Spannung UUA größer ist als der Betrag der Spannung UUE. Das hat zur Folge, dass im Kondensator eine Energiemenge gespeichert ist, welche ausreicht, die Energieversorgung des Magnetsystems M während der Umpolphase vollständig durch den Kondensator erfolgen zu lassen. Idealerweise entspricht die Spannung UUE ungefähr der Spannung UK2 der darauffolgenden Messphase MP2. Dadurch lässt sich ein Einschwingverhalten der Spannungsversorgung zu Beginn der Messphase MP2 verringern oder unterdrücken.

Während der nachfolgenden Messphase MP2 wird eine im Wesentlichen konstante Spannung UK2 an das Magnetsystem angelegt.

Der der Messphase MP2 folgende Spannungsverlauf ist skizziert.

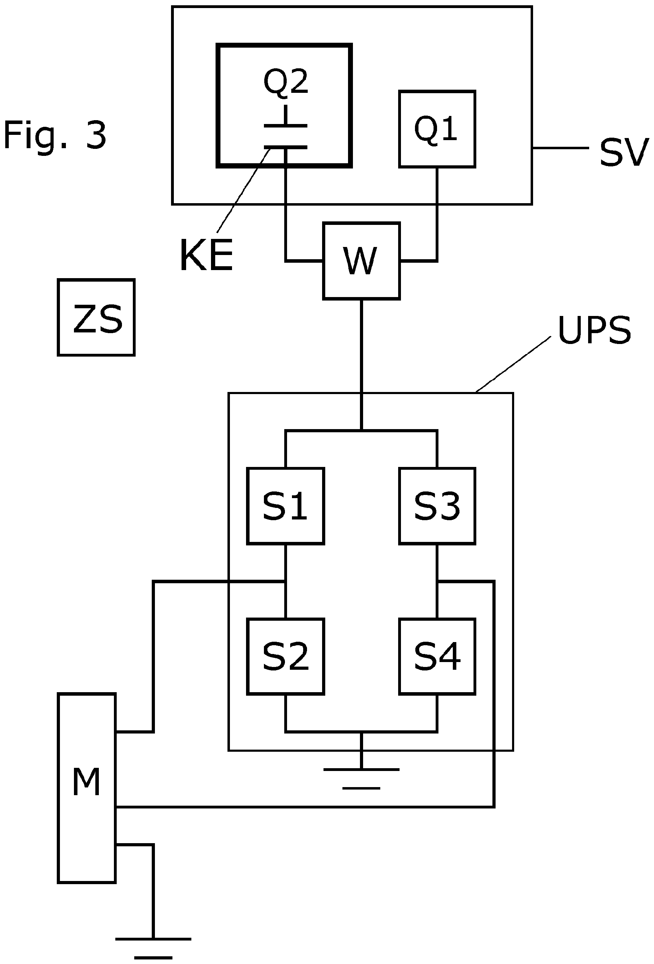

Fig. 3 zeigt einen schematischen Aufbau der erfindungsrelevanten elektronischen Komponenten eines erfindungsgemäßen magnetisch-induktiven Durchflussmessgeräts welche ein Magnetsystem M, eine Umpolschaltung UPS, eine zentrale Steuereinheit ZS, eine Wechselschaltung W und eine Spannungsversorgung SV mit einer ersten Spannungsquelle Q1 und einer zweiten Spannungsquelle Q2 umfassen, wobei die zweite Spannungsquelle Q2 eine Kondensatoreinheit KE aufweist.

Die Umpolschaltung weist vier Schaltelemente auf, welche die Zustände "leitend" und "nicht leitend" annehmen können, wobei ein erstes Schaltelement S1 und zweites Schaltelement S2 eine erste Serienschaltung bilden, und wobei ein drittes Schaltelement S3 und ein viertes Schaltelement S4 eine zweite Serienschaltung bilden und wobei die erste Serienschaltungen und die zweite Serienschaltung parallel geschaltet sind. Das Beaufschlagen des Magnetsystems mit einer Spannung erfolgt durch Abgreifen eines ersten elektrischen Potentials zwischen dem ersten Schaltelement und dem zweiten Schaltelement und einem zweiten elektrischen Potentials zwischen dem dritten Schaltelement und dem vierten Schaltelement. Abwechselnd sind entweder die Schaltelemente S1 und S4 leitend geschaltet und die Schaltelemente S2 und S3 nicht leitend geschaltet, oder umgekehrt. Je nach Schaltung der Schaltelemente S1 bis S4 wird also die Richtung des Potentialgefälles über dem Magnetsystem M vorgegeben. Die Schaltelemente sind dabei beispielsweise Transistoren oder Relais.

Die Wechselschaltung W wechselt zwischen der Spannungsversorgung des Magnetsystems durch die erste Spannungsquelle Q1 und durch die zweite Spannungsquelle Q2.

Die Wechselschaltung W und die Umpolschaltung UPS werden durch die zentrale Steuereinheit ZS gesteuert, welche zentrale Steuereinheit beispielsweise ein Mikroprozessor mit einer Software zum Betreiben des Mikroprozessors ist. Der Übersicht geschuldet wurde in Fig. 3 verzichtet, eine Anbindung der zentralen Steuereinheit ZS an die Wechselschaltung W sowie an die Schaltelemente der Umpolschaltung UPS zu skizzieren.

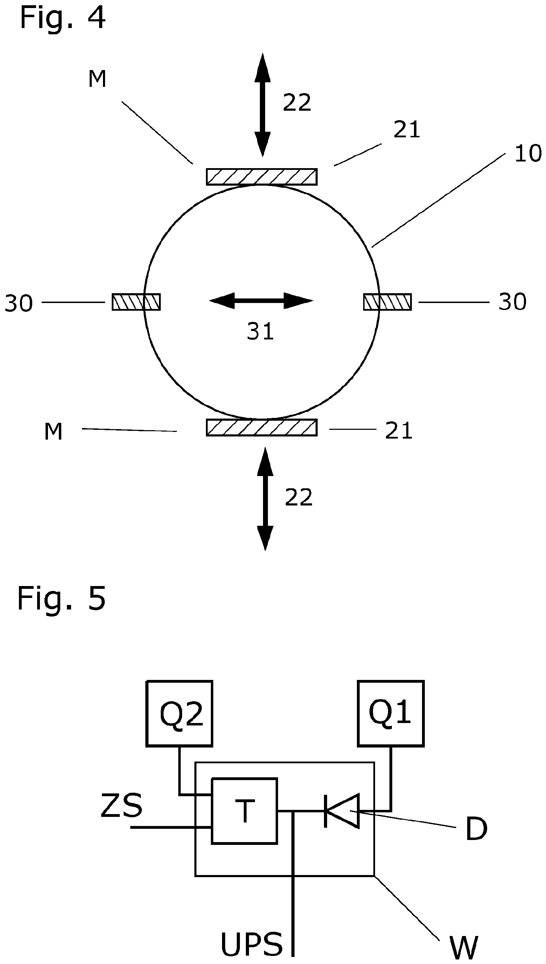

Fig. 4 zeigt einen Querschnitt durch ein beispielhaftes magnetisch-induktives Durchflussmessgerät welches ein Messrohr 10, ein Magnetsystem M mit zwei Spulen 21 zur Erzeugung eines Magnetfelds 22, welches im Wesentlichen senkrecht zu einer Messrohrachse steht und zwei Messelektroden 30 umfasst. Das Magnetfeld 22 erzeugt im durch das Messrohr 10 strömenden Medium eine durchflussabhängige Spannung 31, welche von den Messelektroden abgegriffen wird. Idealerweise wird das Magnetfeld 22 über eine metallische Feldrückrührung (nicht gezeigt) zwischen den Spulen 21 außerhalb des Messrohrs geleitet. Die Steuerung des Magnetsystems M und das Abgreifen sowie die Auswertung der von den Messelektroden 20 abgegriffenen Spannung wird von der elektronischen Betriebsschaltung sichergestellt. Die Anbindung des Magnetsystems sowie der Messelektroden an die elektronische Betriebsschaltung ist aus Gründen der Übersichtlichkeit nicht skizziert.

Fig. 5 zeigt einen beispielhaften Aufbau einer erfindungsgemäßen Wechselschaltung W, welche einen Transistor T und eine Diode D aufweist, wobei der Kollektor des Transistors mit der zweiten Spannungsquelle Q2 und die Basis des Transistors mit der zentralen Steuereinheit verbunden ist. Der Emitter des Transistors ist mit der Umpolschaltung UPS verbunden, wobei die erste Spannungsquelle Q1 über eine Diode D mit dem Emitter und der Umpolschaltung verbunden ist, wobei die Diode von der ersten Spannungsquelle Q1 zum Emitter in Durchlassrichtung orientiert ist. Während einer Messphase ist der Transistor sperrend, so dass die erste Spannungsquelle Q1 zur Energieversorgung des Magnetsystems herangezogen wird.

Während einer Umpolphase ist der Transistor leitend. Da die Überspannung UU, welche von der zweiten Spannungsquelle Q2 erzeugt wird, vom Betrag größer ist als die Spannung UK1 bzw. UK2, welche von der ersten Spannungsquelle Q1 erzeugt werden, trägt nur die zweite Spannungsquelle Q2 zur Energieversorgung des Magnetsystems M während der Umpolphase bei.

### Bezugszeichenliste

- 10: Messrohr
- 21: Spule
- 22: Magnetfeld
- 30: Elektrode
- 31: im Medium induzierte Spannung
- 100: Verfahren
- MP1: Messphase vor Umpolphase
- MP2: Messphase nach Umpolphase
- UP: Umpolphase
- UK1: Spannung über Magnetsystem während MP1
- UK2: Spannung über Magnetsystem während MP2
- UU: Überspannung während der Umpolphase
- UUA: Überspannung zu Beginn der Umpolphase
- UUE: Überspannung zu Ende der Umpolphase
- SV: Spannungsversorgung
- Q1: erste Spannungsquelle
- Q2: zweite Spannungsquelle
- W: Wechselschaltung
- T: Transistor
- D: Diode
- ZS: zentrale Steuereinheit
- UPS: Umpolschaltung
- S1: erstes Schaltelement
- S2: zweites Schaltelement
- S3: drittes Schaltelement
- S4: viertes Schaltelement
- M: Magnetsystem

## Patentansprüche

1. Verfahren zum Betreiben eines magnetisch-induktiven Durchflussmessgeräts zur Messung der Durchflussgeschwindigkeit oder des Volumendurchflusses eines Mediums in einem Messrohr (10),
wobei mindestens ein Magnetsystem (M) mit mindestens einer Spule (21) ein im Wesentlichen senkrecht zu einer Längsachse des Messrohrs (10) verlaufendes und periodisch die Polarität änderndes Magnetfeld (22) zur Induktion einer durchflussabhängigen Spannung (31) im Medium erzeugt,
wobei in einer Messphase zum Aufnehmen von mindestens einem Spannungswert zur Ermittlung der Durchflussgeschwindigkeit oder dem Volumendurchfluss ein im Wesentlichen konstantes Magnetfeld (22) erzeugt wird, welches in einer Umpolphase (UP) umgepolt wird;
und wobei eine elektronische Betriebsschaltung mit einer Umpolschaltung (UPS) die Anbindung des Magnetsystems (M) über die Umpolschaltung an eine Spannungsversorgung (SV) steuert, wobei die Spannungsversorgung (SV) eine erste Spannungsquelle (Q1) und eine zweite Spannungsquelle (Q2) aufweist, wobei die zweite Spannungsquelle (Q2) eine Kondensatoreinheit (KE) aufweist, welche als Energiespeicher dient;
wobei die erste Spannungsquelle (Q1) dazu eingerichtet ist, das Magnetsystem (M) während der Messphase zu betreiben und wobei die zweite Spannungsquelle (Q2) dazu eingerichtet ist, das Magnetsystem (M) während der Umpolphase (UP) zu betreiben, wobei die Umpolschaltung die Polarität der Anbindung alternierend steuert;
wobei mindestens zwei mit dem Medium gekoppelte Messelektroden (30) die im Medium durch das Magnetfeld induzierte Spannung (31) erfassen, wobei die elektronische Betriebsschaltung des Weiteren dazu eingerichtet ist, die von den Messelektroden (30) erfasste Spannung auszuwerten;
wobei das Verfahren folgende Schritte aufweist:
Beaufschlagen des Magnetsystems (M) über die Umpolschaltung (UPS) mit einer im Wesentlichen konstanten Spannung (UK1) durch die erste Spannungsquelle (Q1) und Laden der Kondensatoreinheit (KE) während einer der Umpolphase (UP) vorausgehenden ersten Messphase (MP1);
Ändern der Polarität der Anbindung mittels der Umpolschaltung (UPS) und Beaufschlagen des Magnetsystems (M) über die Umpolschaltung (UPS) mit einer veränderlichen Überspannung (UU) durch die zweite Spannungsquelle (Q2) während der Umpolphase (UP),
Beaufschlagen des Magnetsystems (M) über die Umpolschaltung (UPS) mit einer konstanten Spannung (UK2) durch die erste Spannungsquelle (Q1) während einer auf die Umpolphase (UP) folgenden zweiten Messphase (MP2),
wobei
die Überspannung (UU) einen Anfangswert (UUA) zu Beginn der Umpolphase und einen Endwert (UUE) zu Ende der Umpolphase (UP) aufweist, wobei der Betrag des Anfangswerts (UUA) größer ist als der Betrag des Endwerts (UUE),
wobei die Kondensatoreinheit (KE) zumindest am Anfang der Umpolphase (UP) aufgrund einer Einschwingeigenschaft des Magnetsystems (M) vom Magnetsystem geladen wird,
wobei zumindest am Ende der Umpolphase (UP) die Energieversorgung des Magnetsystems zumindest teilweise durch die Kondensatoreinheit (KE) erfolgt,
und
wobei die Betriebsschaltung mindestens eine Wechselschaltung (W) aufweist, welches Wechselschaltung das Magnetsystem (M) entweder an die erste Spannungsquelle (Q1) oder an die zweite Spannungsquelle (Q2) anbindet, wobei die Betriebsschaltung die Wechselschaltung (W) steuert.

2. Verfahren nach Anspruch 1,
wobei zumindest am Ende der Umpolphase (UP) die Energieversorgung des Magnetsystems vollständig von der Kondensatoreinheit (KE) übernommen wird.

3. Verfahren nach Anspruch 1 oder 2,
wobei während der gesamten Umpolphase (UP) die Energieversorgung vollständig vom Kondensator übernommen wird.

4. Verfahren nach mindestens einem der vorigen Ansprüche,
wobei der Betrag des Endwerts (UUE) größer eingestellt wird als der Betrag der Spannung (UK1, UK2).

5. Verfahren nach mindestens einem der Ansprüche 1 bis 3,
wobei der Betrag des Endwerts (UUE) im Wesentlichen gleich dem Betrag der Spannung (UK1, UK2) eingestellt wird.

6. Verfahren nach mindestens einem der vorigen Ansprüche,
wobei der Betrag der Überspannung (UU) auf 120V begrenzt wird.

7. Verfahren nach mindestens einem der vorigen Ansprüche,
wobei der Kondensator während der Messphase (MP1, MP2) durch die zweite Spannungsquelle (Q2) aufgeladen wird.

8. Magnetisch-induktives Durchflussmessgerät zur Messung der Durchflussgeschwindigkeit oder des Volumendurchflusses eines Mediums in einem Messrohr (10) zur Anwendung des Verfahrens nach einem der vorhergehenden Ansprüche,
wobei das Durchflussmessgerät umfasst:
Ein Messrohr (10);
mindestens ein Magnetsystem (M) mit jeweils mindestens einer Spule (21), welches Magnetsystem dazu eingerichtet ist, ein im Wesentlichen senkrecht zu einer Längsachse des Messrohrs verlaufendes und periodisch die Polarität änderndes Magnetfeld zu (22) erzeugen;
und mindestens zwei im Messrohr (10) angeordnete Messelektroden (30), welche mit dem Medium gekoppelt sind, und wobei die Messelektroden (30) dazu eingerichtet sind, eine im Medium durch das Magnetfeld induzierte, durchflussabhängige Spannung (31) zu erfassen;
und mindestens eine Spannungsversorgung (SV), welche eine erste Spannungsquelle (Q1) und eine zweite Spannungsquelle (Q2) aufweist, wobei die zweite Spannungsquelle eine Kondensatoreinheit (KE) aufweist, welche als Energiespeicher dient;
und eine elektronische Betriebsschaltung mit einer Umpolschaltung (UPS), welche Betriebsschaltung dazu eingerichtet ist, das Magnetsystem (M) und die Messelektroden (30) zu betreiben und mit der Umpolschaltung (UPS) die Anbindung des Magnetsystems (M) über die Umpolschaltung (UPS) an die Spannungsversorgung (SV) zu steuern;
wobei die Betriebsschaltung des Weiteren mindestens eine Wechselschaltung (W) aufweist, welches dazu eingerichtet ist, das Magnetsystem (M) entweder an die erste Spannungsquelle (Q1) oder an die zweite Spannungsquelle (Q2) anzubinden, wobei die Betriebsschaltung dazu eingerichtet ist, die Wechselschaltung (W) zu steuern.

9. Magnetisch-induktives Durchflussmessgerät nach Anspruch 8,
wobei die zweite Spannungsquelle (Q2) dazu eingerichtet ist, die Kondensatoreinheit (KE) während einer Messphase (MP1, MP2) zu laden.

10. Magnetisch-induktives Durchflussmessgerät nach Anspruch 8 oder 9,
wobei die Kondensatoreinheit (KE) dazu eingerichtet ist, zumindest zu Beginn einer Umpolphase vom Magnetsystem (M) geladen zu werden.

11. Magnetisch-induktives Durchflussmessgerät nach einem der Ansprüche 8 bis 10,
wobei die Wechselschaltung (W) mindestens einen Transistor (T) und mindestens eine Diode (D) aufweist.

12. Magnetisch-induktives Durchflussmessgerät nach Anspruch 10 oder 11,
wobei die Betriebsschaltung eine zentrale Steuereinheit (ZS) zum Steuern der Umpolschaltung (UPS) und/oder der Wechselschaltung (W) aufweist.

13. Magnetisch-induktives Durchflussmessgerät nach einem der Ansprüche 8 bis 12,
wobei die Umpolschaltung vier Schaltelemente aufweist, wobei ein erstes Schaltelement (S1) und zweites Schaltelement (S2) eine erste Serienschaltung bilden, und wobei ein drittes Schaltelement (S3) und ein viertes Schaltelement (S4) eine zweite Serienschaltung bilden und wobei die erste Serienschaltung und die zweite Serienschaltung parallelgeschaltet sind.

14. Magnetisch-induktives Durchflussmessgerät nach Anspruch 13,
wobei das Beaufschlagen des Magnetsystems (M) mit einer Spannung durch Abgreifen eines ersten elektrischen Potentials zwischen dem ersten Schaltelement (S1) und dem zweiten Schaltelement (S2) und einem zweiten elektrischen Potential zwischen dem dritten Schaltelement (S3) und dem vierten Schaltelement (S4) erfolgt.

## Claims

1. Procedure to operate an electromagnetic flowmeter designed to measure the flow velocity or volume flow of a medium flowing through a measuring tube (10), wherein at least one magnet system (M) with at least one coil (21) generates a magnetic field (22) in the medium that is essentially perpendicular to a longitudinal axis of the measuring tube (10) and changes polarity periodically, said field being designed to induce a flow-dependent voltage (31) in the medium,
wherein an essentially constant magnetic field (22) is generated in a measurement phase to record at least one voltage value for the purpose of determining the flow velocity or the volume flow, wherein said magnetic field reverses polarity in a polarity reversal phase (UP);
and wherein an electronic operating circuit with a polarity reversal circuit (UPS) controls the connection of the magnet system (M) to a voltage supply (SV) via the polarity reversal circuit,
wherein the voltage supply (SV) has a first voltage source (Q1) and a second voltage source (Q2), wherein the second voltage source (Q2) has a capacitor unit (KE), which serves as an energy storage unit;
wherein the first voltage source (Q1) is designed to operate the magnet system (M) during the measuring phase and the second voltage source (Q2) is designed to operate the magnet system (M) during the polarity reversal phase (UP), wherein the polarity reversal circuit controls the polarity of the connection in an alternating manner;
wherein at least two measuring electrodes (30) that are coupled to the medium measure the voltage (31) induced in the medium by the magnetic field, wherein the electronic operating circuit is further designed to evaluate the voltage measured by the measuring electrodes (30);
wherein the procedure comprises the following steps:
Application of an essentially constant voltage (UK1) to the magnet system (M) by the first voltage source (Q1) via the polarity reversal circuit (UPS) and charging of the capacitor unit (KE) during a first measuring phase (MP1) preceding the polarity reversal phase (UP);
Changing of the polarity of the connection by means of the polarity reversal circuit (UPS) and application of a variable overvoltage (UU) to the magnet system (M) via the polarity reversal circuit (UPS) by the second voltage source (Q2) during the polarity reversal phase (UP),
Application of a constant voltage (UK2) to the magnet system (M) by the first voltage source (Q1) by means of the polarity reversal circuit (UPS) during a second measuring phase (MP2) that follows the polarity reversal phase (UP),
wherein the overvoltage (UU) has an initial value (UUA) at the start of the polarity reversal phase and a final value (UUE) at the end of the polarity reversal phase (UP), wherein the absolute value of the initial value (UUA) is greater than the absolute value of the final value (UUE),
wherein the capacitor unit (KE) is charged by the magnet system at least at the start of the polarity reversal phase (UP) due to an oscillation characteristic of the magnet system (M),
wherein the energy of the magnet system is at least partially supplied by the capacitor unit (KE) at least at the end of the polarity reversal phase (UP), and
wherein the operating circuit has at least a changeover circuit (W), wherein said changeover circuit connects the magnet system (M) either to the first voltage source (Q1) or to the second voltage source (Q2), wherein the operating circuit controls the changeover circuit (W).

2. Procedure as claimed in Claim 1,
wherein, at least at the end of the polarity reversal phase (UP), the power supply of the magnet system is the full responsibility of the capacitor unit (KE).

3. Procedure as claimed in Claim 1 or 2,
wherein, during the entire polarity reversal phase (UP), the supply of power is the full responsibility of the capacitor.

4. Procedure as claimed in at least one of the previous claims,
wherein the absolute value of the final value (UUE) is set to be greater than the absolute value of the voltage (UK1, UK2).

5. Procedure as claimed in at least one of the Claims 1 to 3,
wherein the absolute value of the final value (UUE) is set to be essentially equal to the absolute value of the voltage (UK1, UK2).

6. Procedure as claimed in at least one of the previous claims,
wherein the value of the overvoltage (UU) is limited to 120 V.

7. Procedure as claimed in at least one of the previous claims,
wherein the capacitor is charged by the second voltage source (Q2) during the measuring phase (MP1 , MP2).

8. Electromagnetic flowmeter for measuring the flow velocity or the volume flow of a medium flowing through a measuring tube (10) for the application of the procedure as claimed in one of the previous claims, said flowmeter comprising:
a measuring tube (10);
at least a magnet system (M) with at least one coil (21) in each case, wherein said magnet system is designed to generate a magnetic field (22) that is essentially perpendicular to a longitudinal axis of the measuring tube and changes polarity periodically;
and at least two measuring electrodes (30) arranged in the measuring tube (10), wherein said electrodes are coupled to the medium, and wherein said measuring electrodes (30) are designed to measure a flow-dependent voltage (31) that is induced in the medium by the magnetic field;
and at least one power supply (SV), which has a first voltage source (Q1) and a second voltage source (Q2), wherein the second voltage source has a capacitor unit (KE) that serves as an energy storage unit;
and an electronic operating circuit with a polarity reversal circuit (UPS), wherein said operating circuit is designed to operate the magnet system (M) and the measuring electrodes (30) and to control, with the polarity reversal circuit (UPS), the connection of the magnet system (M) to the voltage supply (SV) via the polarity reversal circuit (UPS);
wherein the operating circuit further comprises at least a changeover circuit (W) that is designed to connect the magnet system (M) either to the first voltage source (Q1) or to the second voltage source (Q2), wherein the operating circuit is designed to control the changeover circuit (W).

9. Electromagnetic flowmeter as claimed in Claim 8,
wherein the second voltage source (Q2) is designed to charge the capacitor unit (KE) during a measuring phase (MP1, MP2).

10. Electromagnetic flowmeter as claimed in Claim 8 or 9,
wherein the capacitor unit (KE) is designed to be charged by the magnet system (M) at least at the start of a polarity reversal phase.

11. Electromagnetic flowmeter as claimed in one of the Claims 8 to 10,
wherein the changeover circuit (W) comprises at least a transistor (T) and at least a diode (D).

12. Electromagnetic flowmeter as claimed in Claim 10 or 11,
wherein the operating circuit comprises a central control unit (ZS) to control the polarity reversal circuit (UPS) and/or the changeover circuit (W).

13. Electromagnetic flowmeter as claimed in one of the Claims 8 to 12,
wherein the polarity reversal circuit comprises four switching elements, a first switching element (S1) and a second switching element (S2) forming a first series circuit, and a third switching element (S3) and a fourth switching element (S4) forming a second series circuit, and wherein the first series circuit and the second series circuit are switched in parallel.

14. Electromagnetic flowmeter as claimed in Claim 13,
wherein the application of a voltage to the magnet system (M) is performed by measuring a first electrical potential between the first switching element (S1) and the second switching element (S2) and a second electrical potential between the third switching element (S3) and the fourth switching element (S4).

## Revendications

1. Procédé d'exploitation d'un débitmètre magnétique destiné à la mesure de la vitesse d'écoulement ou du débit volumique d'un produit s'écoulant dans un tube de mesure (10),
pour lequel au moins un système magnétique (M) avec au moins une bobine (21) génère dans le produit un champ magnétique (22) s'étendant pour l'essentiel perpendiculairement à un axe longitudinal du tube de mesure (10) et changeant périodiquement de polarité, lequel champ est destiné à induire une tension (31) dépendant du débit,
pour lequel un champ magnétique (22) sensiblement constant est généré dans une phase de mesure pour enregistrer au moins une valeur de tension afin de déterminer la vitesse d'écoulement ou le débit volumique, lequel champ magnétique est inversé dans une phase d'inversion de polarité (UP) ;
et pour lequel un circuit d'exploitation électronique avec un circuit d'inversion de polarité (UPS) commande la liaison du système magnétique (M) par l'intermédiaire du circuit d'inversion de polarité à une alimentation en tension (SV),
l'alimentation en tension (SV) présentant une première source de tension (Q1) et une deuxième source de tension (Q2), la deuxième source de tension (Q2) présentant une unité de condensateur (KE), laquelle unité sert d'accumulateur d'énergie ;
la première source de tension (Q1) étant conçue pour faire fonctionner le système magnétique (M) pendant la phase de mesure et la deuxième source de tension (Q2) étant conçue pour faire fonctionner le système magnétique (M) pendant la phase d'inversion de polarité (UP), le circuit d'inversion de polarité commandant alternativement la polarité de la liaison ;
au moins deux électrodes de mesure (30) couplées au produit mesurant la tension (31) induite dans le produit par le champ magnétique, le circuit d'exploitation électronique étant en outre conçu pour évaluer la tension mesurée par les électrodes de mesure (30) ;
lequel procédé comprend les étapes suivantes :
Application au système magnétique (M), par l'intermédiaire du circuit d'inversion de polarité (UPS), d'une tension sensiblement constante (UK1) par la première source de tension (Q1) et la charge de l'unité de condensateur (KE) pendant une première phase de mesure (MP1) précédant la phase d'inversion de polarité (UP) ;
Changement de la polarité de la liaison au moyen du circuit d'inversion de polarité (UPS) et application d'une surtension variable (UU) au système magnétique (M) via le circuit d'inversion de polarité (UPS) par la deuxième source de tension (Q2) pendant la phase d'inversion de polarité (UP),
Application au système magnétique (M), par l'intermédiaire du circuit d'inversion de polarité (UPS), d'une tension constante (UK2) par la première source de tension (Q1) pendant une deuxième phase de mesure (MP2) suivant la phase d'inversion de polarité (UP),
la surtension (UU) présentant une valeur initiale (UUA) au début de la phase d'inversion de polarité et une valeur finale (UUE) à la fin de la phase d'inversion de polarité (UP), la valeur absolue de la valeur initiale (UUA) étant supérieure à la valeur absolue de la valeur finale (UUE),
l'unité de condensateur (KE) étant chargée par le système magnétique au moins au début de la phase d'inversion de polarité (UP) en raison d'une caractéristique d'oscillation du système magnétique (M),
au moins à la fin de la phase d'inversion de polarité (UP), l'alimentation en énergie du système magnétique étant assurée au moins partiellement par l'unité de condensateur (KE),
le circuit d'exploitation comprenant au moins un circuit inverseur (W), lequel circuit inverseur relie le système magnétique (M) soit à la première source de tension (Q1), soit à la deuxième source de tension (Q2), le circuit d'exploitation commandant le circuit inverseur (W).

2. Procédé selon la revendication 1,
pour lequel, au moins à la fin de la phase d'inversion de polarité (UP), l'alimentation en énergie du système magnétique est entièrement assurée par l'unité de condensateur (KE).

3. Procédé selon la revendication 1 ou 2,
pour lequel, pendant toute la phase d'inversion de polarité (UP), l'alimentation en énergie est entièrement assurée par le condensateur.

4. Procédé selon au moins l'une des revendications précédentes,
pour lequel la valeur absolue de la valeur finale (UUE) est réglée à une valeur supérieure à la valeur absolue de la tension (UK1, UK2).

5. Procédé selon au moins l'une des revendications 1 à 3,
pour lequel la valeur absolue de la valeur finale (UUE) est réglée de manière à être sensiblement égale à la valeur absolue de la tension (UK1, UK2).

6. Procédé selon au moins l'une des revendications précédentes,
pour lequel la valeur de la surtension (UU) est limitée à 120 V.

7. Procédé selon au moins l'une des revendications précédentes,
pour lequel le condensateur est chargé par la deuxième source de tension (Q2) pendant la phase de mesure (MP1 , MP2).

8. Débitmètre magnétique destiné à la mesure de la vitesse d'écoulement ou du débit volumique d'un produit s'écoulant dans un tube de mesure (10) pour l'application du procédé selon l'une des revendications précédentes, le débitmètre comprenant :
un tube de mesure (10) ;
au moins un système magnétique (M) avec respectivement au moins une bobine (21), lequel système magnétique est conçu pour générer un champ magnétique (22) s'étendant pour l'essentiel perpendiculairement à un axe longitudinal du tube de mesure et changeant périodiquement de polarité ;
et au moins deux électrodes de mesure (30) disposées dans le tube de mesure (10), lesquelles électrodes sont couplées au produit, et les électrodes de mesure (30) étant conçues pour mesurer une tension (31) dépendant du débit, induite dans le produit à travers le champ magnétique ;
et au moins une alimentation en tension (SV), laquelle présente une première source de tension (Q1) et une deuxième source de tension (Q2), la deuxième source de tension présentant une unité de condensateur (KE) qui sert d'accumulateur d'énergie ;
et un circuit d'exploitation électronique avec un circuit d'inversion de polarité (UPS), lequel circuit d'exploitation est conçu pour faire fonctionner le système magnétique (M) et les électrodes de mesure (30) et pour commander avec le circuit d'inversion de polarité (UPS) la liaison du système magnétique (M) à l'alimentation en tension (SV) via le circuit d'inversion de polarité (UPS) ;
le circuit d'exploitation comprenant en outre au moins un circuit inverseur (W) qui est conçu pour relier le système magnétique (M) soit à la première source de tension (Q1), soit à la deuxième source de tension (Q2), le circuit d'exploitation étant conçu pour commander le circuit inverseur (W).

9. Débitmètre magnétique selon la revendication 8,
pour lequel la deuxième source de tension (Q2) est conçue pour charger l'unité de condensateur (KE) pendant une phase de mesure (MP1, MP2).

10. Débitmètre magnétique selon la revendication 8 ou 9,
pour lequel l'unité de condensateur (KE) est conçue pour être chargée par le système magnétique (M) au moins au début d'une phase d'inversion de polarité.

11. Débitmètre magnétique selon l'une des revendications 8 à 10,
pour lequel le circuit inverseur (W) comprend au moins un transistor (T) et au moins une diode (D).

12. Débitmètre magnétique selon la revendication 10 ou 11,
pour lequel le circuit d'exploitation comprend une unité de commande centrale (ZS) pour commander le circuit d'inversion de polarité (UPS) et/ou le circuit inverseur (W).

13. Débitmètre magnétique selon l'une des revendications 8 à 12,
pour lequel le circuit d'inversion de polarité comprend quatre éléments de commutation, un premier élément de commutation (S1) et un deuxième élément de commutation (S2) formant un premier circuit série, et un troisième élément de commutation (S3) et un quatrième élément de commutation (S4) formant un deuxième circuit série, et pour lequel le premier circuit série et le deuxième circuit série sont connectés en parallèle.

14. Débitmètre magnétique selon la revendication 13,
pour lequel l'application d'une tension au système magnétique (M) est réalisée en prélevant un premier potentiel électrique entre le premier élément de commutation (S1) et le deuxième élément de commutation (S2) et un deuxième potentiel électrique entre le troisième élément de commutation (S3) et le quatrième élément de commutation (S4).
